# EUROPEAN PATENT SPECIFICATION

(11) **EP 2 838 181 B1**
(45) Date of publication and mention of the grant of the patent: **30.09.2020**
(21) Application number: 13180230.8
(22) Date of filing: 13.08.2013
(51) Int. Cl.: H02K 3/12, H02K 7/18, H02K 15/06

(54) **Arrangement of a stator segment of an electrical machine**
Anordnung eines Statorsegments einer elektrischen Maschine
Agencement d'un segment de stator d'une machine électrique

(43) Date of publication of application: 18.02.2015
(73) Proprietor: Siemens Gamesa Renewable Energy A/S, 7330 Brande (DK)
(72) Inventor: Lemma, Edom, 7330 Brande (DK)
(74) Representative: Aspacher, Karl-Georg

(56) References cited:
- EP-A1- 2 211 443
- EP-A1- 2 226 923
- DE-B3-102009 032 882

## Description

### FIELD OF THE INVENTION

The present invention relates to an arrangement, in particular a winding arrangement, of a stator segment of an electrical machine. The arrangement comprises a plurality of windings, each of the windings comprising a winding head. More specifically, the invention relates to an advantageous design of the winding head. Furthermore, the invention relates to a wind turbine with a generator, wherein the generator comprises a stator segment with an advantageous winding arrangement as described above. Finally, the invention relates to a method of manufacturing such an arrangement.

### BACKGROUND OF THE INVENTION

An electrical machine such as a generator or a motor typically comprises a rotor and a stator. The stator, which might be divided into several stator segments, usually comprises a stator core and windings, the latter being embedded in the stator core. These windings may either take power or generate power, depending on the type of the electrical machine, i.e. depending if the electrical machine is a generator or a motor. The windings may randomly formed or preformed. Random windings may be wound on the stator core in situ and are usually implemented for small electrical machines. In particular for larger electrical machines, preformed windings, which are casted and subsequently inserted into winding slots of the stator core, are advantageous.

Diverse designs of a winding arrangement of a stator are known. For instance, the European patent application EP 2 166 644 A1 discloses a group of three stator windings, wherein each stator winding forms a closed loop with two winding head segments. The three winding head segments on one side of the winding arrangement are thereby differently tilted with regard to a radial direction.

In the European patent application EP 2 166 645 A1, also a group of three stator windings for a stator of an electrical machine is disclosed. There, some of the winding head segments feature a specific design, namely a combination of a rotation about an axis and a translation along that same axis.

Additionally, the European patent application EP 2 383 868 A1 discloses a winding arrangement with a plurality of windings, wherein the winding head segments of the windings have a similar length compared with each other.

Furthermore, the European patent application EP 2 226 923 A1 discloses a winding arrangement with a plurality of windings, wherein two types of winding head segments are intertwined with each other.

Yet another example of a winding arrangement with intertwined winding head segments has been disclosed in the European patent application EP 2 211 443 A1.

However, there exist several disadvantages in conventional winding arrangements. These disadvantages are not restricted to the above mentioned state-of-the-art documents but exist in general.

Disadvantages, for instance, are due to an overhang in mass and size of the winding head segments, which are also referred to as end turns. A first consequence of the overhang of the winding head segments is the space which is required for the winding head segments at the ends of the stator. Another consequence is the elevated mass of the winding. Yet another disadvantage of the overhang is the material, i.e. the amount of material which is needed for the windings. An other disadvantage is a clogged space around the winding head segments which leads to difficulties in cooling the stator, in particular the windings.

Thus, there exists an urgent need to provide a winding arrangement of a stator of an electrical machine with a more compact and more efficient design.

### SUMMARY OF THE INVENTION

This objective is achieved by the independent claims. The dependent claims describe advantageous developments and modifications of the invention.

In accordance with the invention there is provided an arrangement of a stator segment of an electrical machine. The electrical machine comprises a rotor which is rotatably mounted about an axis of rotation.

The stator segment comprises a stator core with a plurality of winding slots, each winding slot extending along the axis of rotation and circumferentially spaced to each other with regard to the axis of rotation. The arrangement comprises at least one group of three windings, each of the three windings is shaped as a closed loop. The loop thus defines an inner area of the winding and an outer area with regard to the winding. Each winding comprises a straight first winding segment, a straight second winding segment and a winding head. Each first winding segment is substantially parallel to each second winding segment. Furthermore, the first winding segment of the first winding is arranged and prepared to be embedded in a first winding slot and the second winding segment of the first winding is arranged and prepared to be embedded in a fourth winding slot. The fourth winding slot is the third adjacent winding slot with regard to the first winding slot. Each winding head comprises a winding head closure with a winding head closure inner surface facing to the inner area, and a substantially rectangular winding head closure outer surface facing to the outer area. At least two of the three winding head closure outer surfaces are substantially parallel to each other. Furthermore, the three windings are arranged and prepared to be embedded in winding slots such that each of the three winding heads is shifted with regard to the other two winding heads. Note that the group of three windings comprises an upper winding with an upper winding head closure, a middle winding with a middle winding head closure and a lower winding with a lower winding head closure. The windings are arranged and prepared to be embedded in winding slots such that the lower winding head closure is radially more inward with regard to the axis of rotation than the middle winding head closure, and the middle winding head closure is radially more inward with regard to the axis of rotation than the upper winding head closure.

In other words, the winding head closures of one group of windings are stacked shiftily with each other. Thus, a compact design is realized. Once the three winding head closures are stacked upon each other, there may be a direct connection between the winding head closures. Alternatively, there may be a gap between the winding head closures.

A first advantage of the above described arrangement is its compact design. As two or all of the three winding head closure outer surfaces are parallel to each other, the winding heads are not tilted or twisted or rotated relative to each other. The three winding heads are just shifted or displaced or transposed relative to each other. Thus a very compact and space saving design of the winding heads is realized.

A first consequence of the compact design of the winding heads is the small space that is required for the winding heads, in particular for the winding head closures.

Another advantage of the above described arrangement is the small amount of material that is needed for the winding heads. This is particularly important as the windings of a stator of an electrical machine often comprise expensive material such as metals. Exemplarily, the used material comprises copper.

Another advantage of the inventive arrangement is its good cooling properties. As the space around the winding heads is not clogged, air cooling mechanisms can, for instance, easily be implemented. Likewise, liquid cooling with a water jacket is also easily possible.

Yet another advantage of the above described arrangement is its good vibrational characteristics.

Due to the fact that the stiffness of the windings can be kept the same and that the windings can be tied to each other for an even stiffer design, vibration integrity of the arrangement is superior compared to conventional arrangements.

Advantageously, the windings follow the shape of the winding slots of the stator segment. As the winding slots beneficially have a rectangular cross section, hence a cross section of the winding perpendicular to the axis of rotation is rectangular, too. Alternatively, other shapes of the cross section of the windings are possible. Exemplarily, a circular cross section or an elliptic cross section of the windings is possible.

It is also advantageous to lace winding heads together in order to achieve a higher stiffness or rigidity. In this context, lacing means tieing adjacent windings together so that a stiffer and more rigid assembly is achieved. The lacing is beneficially be performed with fiber tapes or other means and subsequently a vacuum pressure impregnation (VPI) is applied in order to cure the assembly such that it becomes rigid.

Furthermore, it may be advantageous that the winding slot and/or the winding comprises a tapered shape.

The arrangement is characterized in that for each winding a radial extension of the first winding segment and/or a radial extension of the second winding segment is larger, in particular at least three times larger, compared to a radial extension of the winding head closure.

The radial extension is defined as an extension in radial direction, with regard to the axis of rotation of the rotor. In other words, the radial direction is pointing away from the axis of rotation in a plane perpendicular to the axis of rotation. It is advantageous if the radial extension of the first winding segment and/or the radial extension of the second winding segment is at most four times larger compared to the radial extension of the winding head closure. This has the effect that gaps in radial direction between adjacent winding head closures are small.

Furthermore, it is advantageous if not only the axial extension but also a general shape of the three windings is similar. This means that, for instance, the first winding segment and the second winding segment, as well as e.g. the winding head and winding head closure of the three windings, are similar. This again enables an easy and efficient manufacturing of all windings. This is an advantage, in particular with regard to conventional windings, where a winding arrangement comprises differently shaped winding heads.

In another advantageous embodiment, each winding comprises a further winding head, which is located oppositely to the winding head.

As the windings are shaped as a closed loop, it is beneficial that each winding comprises two windings heads, the winding head and the further winding head. In order to further simplify and optimize fabrication of the windings the winding head and the further winding head are advantageously mirror-symmetric and/or point symmetric to each other.

In yet another advantageous embodiment, the stator core comprises a plurality of stator core segments, which are arranged one after another along the axis of rotation.

This arrangement of several stator core segments one after another is also referred to as lamination of the stator. The laminated stator core may have plates at the two opposing ends for compressing the laminations, i.e. the stator core segments, together. The stator core segments may beneficially comprise steel.

In another advantageous embodiment, the windings of adjacent stator segments are connected in series to each other.

For instance, the first winding may be allocated to phase A, the second winding may be allocated to phase B and the third winding may be allocated to phase C of the arrangement. Advantageously, phase A currents are connected by a phase A connector, phase B currents are connected by a phase B connector and phase C currents are connected by a phase C connector. Connection may also be performed by busbars.

In another advantageous embodiment, the stator segment is a part of stator, which in particular comprises a plurality of stator segments.

In other words, the stator core may not only be segmented along the axis of rotation as it has been described in the context of lamination of the stator segment, but may also be segmented circumferentially. This is in particular beneficial for large electrical machines, i.e. large stator with large stator cores. Stator cores may comprise an outer diameter of several meters. Then it may be particularly advantageous for manufacturing and assembly of the stator core to segment the stator core into several stator core segments, i.e. to segment the stator into several stator segments.

In another advantageous embodiment, the electrical machine is a generator.

The invention is also directed towards a wind turbine which comprises a generator which comprises a stator segment which comprises an arrangement as described above.

A wind turbine is a device that can convert wind energy, i.e. kinetic energy from wind, into mechanical energy. Advantageously, the mechanical energy is subsequently used to generate electricity. A wind turbine is also referred to as a wind power plant or a wind charger. Furthermore, a wind turbine may also be referred to as a wind turbine engine.

Wind turbines comprise advantageously large generators with an outer diameter of several meters. For these large generators, beneficially, preformed windings are used. Even more beneficially, an arrangement, i.e. a winding arrangement as described above, is used.

Finally, the invention as defined in the independent claim 10 is also directed towards a method of manufacturing the arrangement of a stator segment of an electrical machine.

In other words, the stator segment comprises at least six windings slots: the first winding slot, the second winding slot, the third winding slot, the fourth winding slot, the fifth winding slot and the sixth winding slot. According to the advantageous method of manufacturing a stator segment, the windings are inserted step by step into the appropriate winding slots, with the lower winding, followed by the middle winding and finished by the upper winding.

Advantageously, the method comprises the following further steps:
m) providing a preformed arrangement, comprising the lower winding, the middle winding and the upper winding, and
n) inserting the arrangement into the winding slots of the stator core.

Thus, it may also be advantageous to manufacture a preformed and prefabricated arrangement, wherein the three windings are already stacked together. Subsequently, this prefabricated arrangement is inserted during one step into the appropriate winding slots of the stator core.

### BRIEF DESCRIPTION OF THE DRAWINGS

Embodiments of the invention are now described, by way of example only, with reference to the accompanying drawings, of which:
- Figure 1: shows a stator and a rotor;
- Figure 2: shows a stator segment with a group of three windings;
- Figure 3: shows a first winding, which can advantageously be used as a lower winding;
- Figure 4: shows a second winding, which can advantageously be used as a middle winding;
- Figure 5: shows a third winding, which can advantageously be used as an upper winding;
- Figure 6: shows a laminated stator segment with a group of three windings inserted into a stator core of the stator segment; and
- Figure 7: shows an advantageous connection between several individual windings.

The illustration in the drawing is schematically.

### DESCRIPTION OF THE DRAWINGS

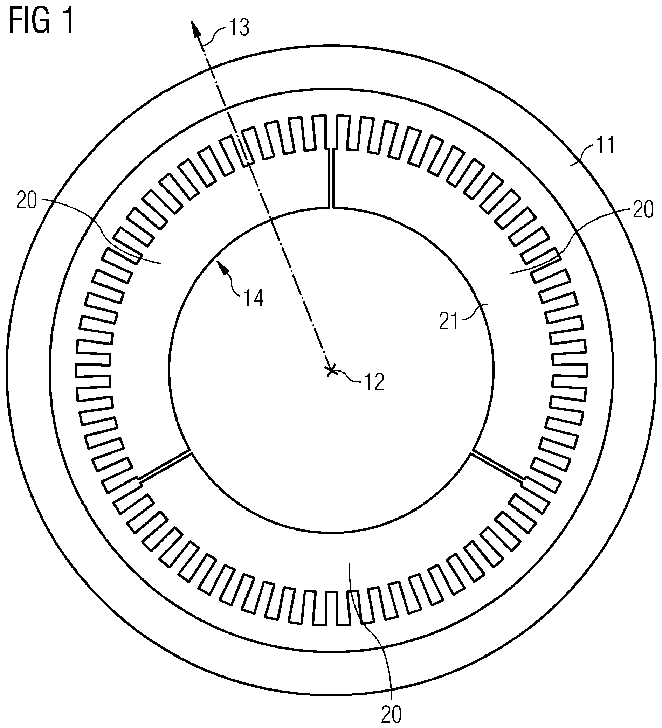

In Figure 1, a stator 14 comprising three stator segments 20 is shown. The three stator segments 20 are radially arranged around a center. Each of the three stator segments 20 comprises a plurality of winding slots.

Furthermore, Figure 1 shows a rotor 11 which can be rotated about an axis of rotation 12. The axis of rotation 12 passes through the center. Radiant from the axis of rotation 12 is a radial direction 13. The stator 14 is located radially more inward with regard to the axis of rotation 12, compared to the rotor 11. Such a rotor 11 is also being denoted as an external rotor.

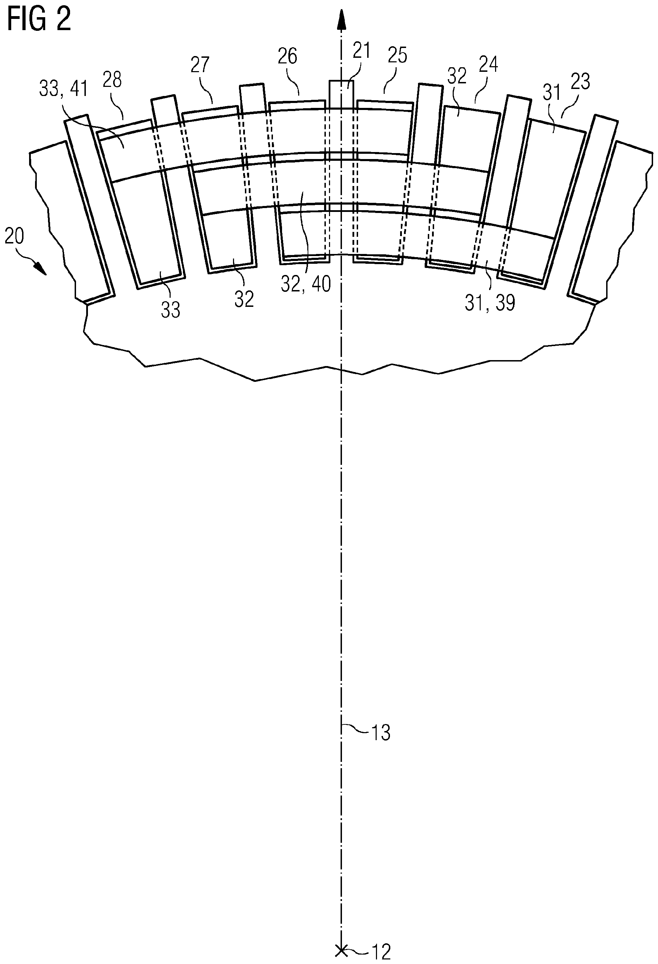

In Figure 2, a part of a stator segment 20 is shown. The stator segment 20 comprises a stator core 21. The stator core 21 comprises in a radial direction 13, with regard to an axis of rotation 12, a plurality of winding slots. More specifically, the stator core 21 comprises a first winding slot 23, a second winding slot 24, a third winding slot 25, a fourth winding slot 26, a fifth winding slot 27 and a sixth winding slot 28. A first winding 31, which is also referred to as a lower winding, a second winding 32, which is also referred to as a middle winding, and a third winding 33, which is also referred to as an upper winding, are inserted into the winding slots. More specifically, the first winding 31 is inserted into the first winding slot 23 and the fourth winding slot 26. More specifically, a first winding segment and a second winding segment are inserted into the windings slots 23, 26.

The first winding 31 also comprises a first winding head closure with a first winding head closure outer surface 39. The first winding head closure outer surface 39 extends in a plane, which is perpendicular to the axis of rotation 12. Additionally, the first winding head closure outer surface 39 is radially most inward with regard to the axis of rotation 12, compared to the second winding 32 and the third winding 33.

Likewise, the second winding 32 is inserted into the second winding slot 24 and the fifth winding slot 27. The second winding 32 comprises a second winding head closure outer surface 40, which is shifted with regard to the first winding head closure outer surface 39. Compared to the first winding head closure outer surface 39, the second winding head closure outer surface 40 is radially more outward.

Likewise, the third winding 33 is inserted into the third winding slot 25 and the sixth winding slot 28. The third winding 33 also comprises a third winding head closure outer surface 41 which is radially most outward compared to the first winding head closure outer surface 39 and the second winding head closure outer surface 40.

It can be seen from Figure 2 that the design and arrangement of the winding head closures, in particular of the winding head closure outer surfaces 39, 40, 41, allows a specifically compact winding arrangement.

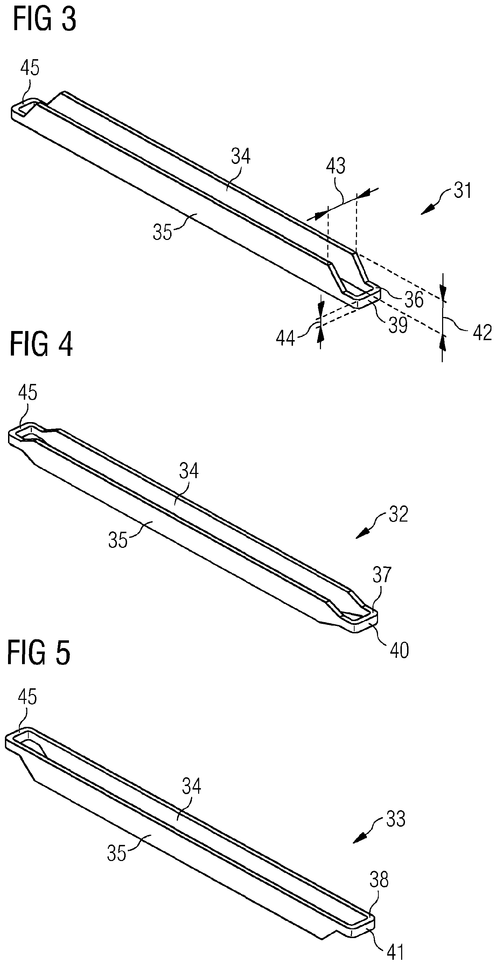

Figures 3 to 5 show in detail the individual windings. Concretely, Figure 3 shows a first winding 31, Figure 4 shows a second winding 32 and Figure 5 shows a third winding 33. Each winding comprises a first winding segment 34 and a second winding segment 35. Both winding segments are similar in shape and are arranged in parallel to each other.

Each of the windings furthermore comprises a winding head closure. The winding head closure closes the loop of the winding at one of its ends. The winding head closure is referred to as the whole part connecting the first winding segment 34 with the second winding segment 35. Specifically, the first winding 31 comprises a first winding head closure 36, the second winding 32 comprises a second winding head closure 37 and the third winding 33 comprises a third winding head closure 38.

One part of the winding head closure is a winding head closure outer surface. The winding head closure outer surface represents the most peripheral or distal part of the winding in a direction which is in parallel to the first winding segment 31 and the second winding segment 35. The winding head closure outer surface comprises a rectangular shape, at least a substantially rectangular shape. As can been seen, a first winding head closure outer surface 39 of the first winding head closure 36, and a second winding head closure outer surface 40 of the second winding head closure 37, and a third winding head closure outer surface 41 of the third winding head closure 38 all have a similar size and a similar shape. Moreover, the winding head closure outer surfaces have the same orientation with regard to the first winding segment 34 and the second winding segment 35.

Furthermore, a radial extension of the first winding segment 42 is more than three times larger than a radial extension of the winding head closure 44. Likewise, a radial extension of the second winding segment 43 is also more than three times larger than a radial extension of the winding head closure 44. The notion "radial" in this context has to be understood with regard to the first winding 31 inserted into a stator segment 20 which can be related to an axis of rotation 12 and a radial direction 13, the radial direction 13 being radiant from the axis of rotation 12.

The radial extensions of the winding head closure and the winding segments are similar for the second winding 32 and the third winding 33, compared to the first winding 31. Thus, the three windings 31, 32, 33 can advantageously be stacked together. Thus, a compact design of a winding arrangement can be achieved.

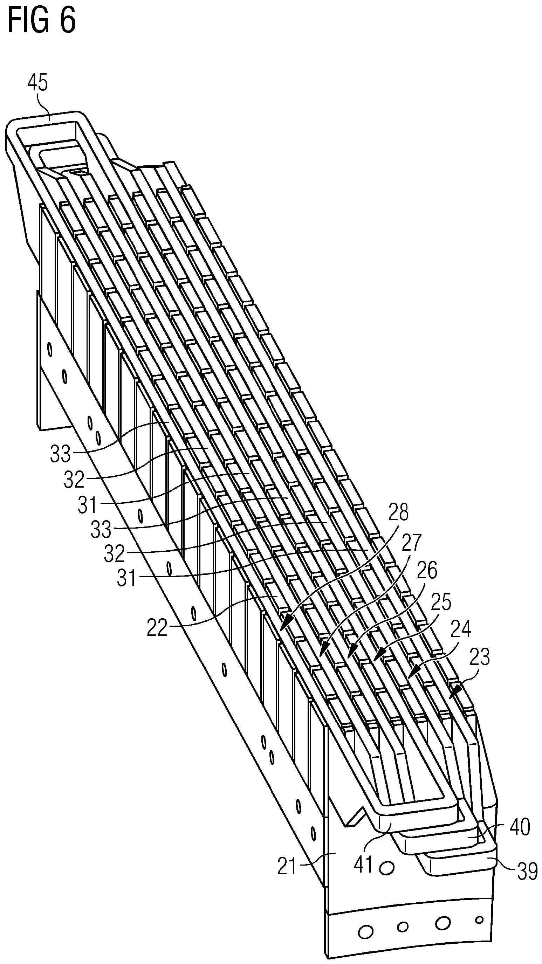

Figure 6 shows the three windings 31, 32, 33 inserted into a stator core 21 of a stator segment. It can be well seen that the winding head closure outer surfaces 39, 40, 41 are in parallel with each other.

Moreover it can be seen that opposite to the winding head closures 36, 37, 38 a further winding head 45 is depicted in Figures 3 to 6. The further winding head 45 comprises a similar shape to the winding head of the same winding.

Exemplarily, Figure 6 shows a laminated stator core 21 comprising a plurality of stator core segments 22, which are arranged one after the other.

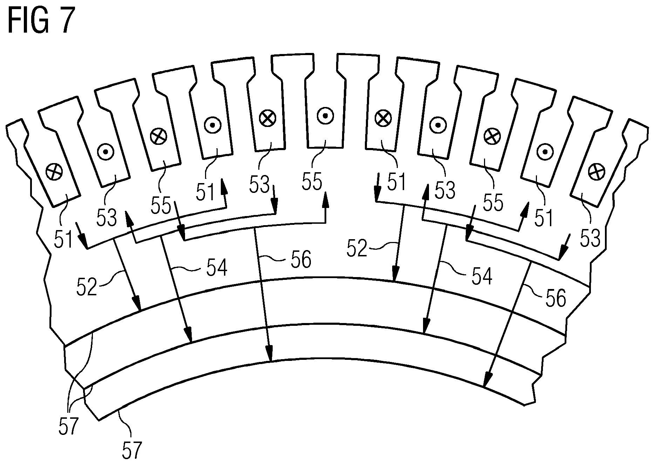

Finally, Figure 7 shows an electrical connection of individual windings. Windings are divided into a phase A winding 51, a phase B winding 53 and a phase C winding 55. Same phase windings are connected by phase collectors, namely phase A collector 52, phase B collector 54 and phase C collector 56.

In Figure 7, two groups of three windings each are shown. It can been seen that, advantageously, the phase collectors 52, 54, 56 are collected by separate busbars 57. Thus, an efficient and beneficial electrical connection of individual windings of a stator segments can be achieved.

## Claims

1. Arrangement of a stator segment (20) of an electrical machine,
wherein
- the electrical machine comprises a rotor (11) which is rotatably mounted about an axis of rotation (12),
- the stator segment (20) comprises a stator core (21) with a plurality of winding slots, each winding slot extending along the axis of rotation (12) and circumferentially spaced to each other with regard to the axis of rotation (12),
- the arrangement comprises at least one group of three windings (31, 32, 33), each of the three windings (31, 32, 33) being shaped as a closed loop, the loop thus defining an inner area of the winding and an outer area with regard to the winding,
- each winding comprises a straight first winding segment (34), a straight second winding segment (35) and a winding head,
- each first winding segment (34) is substantially parallel to each second winding segment (35),
- the first winding segment (34) of the first winding (31) is arranged and prepared to be embedded in a first winding slot (23) and the second winding segment (35) of the first winding (31) is arranged and prepared to be embedded in a fourth winding slot (26), wherein the fourth winding slot (26) is the third adjacent winding slot (25) with regard to the first winding slot (23), - each winding head comprises a winding head closure (36, 37, 38) with a winding head closure inner surface facing to the inner area, and a substantially rectangular winding head closure outer surface facing to the outer area,
- at least two of the three winding head closure outer surfaces are substantially parallel to each other, and
- the three windings (31, 32, 33) are arranged and prepared to be embedded in the winding slots such that each of the three winding heads is shifted with regard to the other two winding heads,
**characterised in that**
- the group of three windings (31, 32, 33) comprises an upper winding with an upper winding head closure (36), a middle winding with a middle winding head closure (37) and a lower winding with a lower winding head closure (38),
wherein the windings (31, 32, 33) are arranged and prepared to be embedded in the winding slots such that
- the lower winding head closure (36) is radially more inward with regard to the axis of rotation (12) than the middle winding head closure (37),
- the middle winding head closure (37) is radially more inward with regard to the axis of rotation (12) than the upper winding head closure (38);
- wherein the middle winding (32) is inserted into a second winding slot (24) and a fifth winding slot (27) and the upper winding (33) is inserted into a third winding slot (25) and a sixth winding slot (28); and
- for each winding a radial extension of the first winding segment (34) and/or a radial extension of the second winding segment (35) is larger, in particular at least three times larger, compared to a radial extension of the winding head closure (36, 37, 38).

2. Arrangement according to the preceding claim,
**characterised in that** axial extensions of the three windings (31, 32, 33) are substantially equal.

3. Arrangement according to one of the preceding claims,
**characterised in that** each winding comprises a further winding head (45), which is located oppositely to the winding head.

4. Arrangement according to claim 3,
**characterised in that** the winding head and the further winding head (45) are mirror-symmetric and/or point symmetric to each other.

5. Arrangement according to one of the preceding claims,
**characterised in that** the stator core (21) comprises a plurality of stator core segments (22) which are arranged one after another along the axis of rotation (12).

6. Arrangement according to one of the preceding claims,
**characterised in that** the windings of adjacent stator segments (20) are connected in series to each other.

7. Arrangement according to one of the preceding claims,
**characterised in that** the stator segment (20) is a part of a stator (14), which in particular comprises a plurality of stator segments (20).

8. Arrangement according to one of the preceding claims,
**characterised in that** the electrical machine is a generator.

9. Wind turbine comprising a generator comprising a stator segment (20) comprising an arrangement according to one of the preceding claims.

10. Method of manufacturing the arrangement of a stator segment (20) of an electrical machine according to any one of claims 1 to 8, and the method comprising the following steps:
a) providing the stator core (21) and the at least one group of three windings (31, 32, 33),
b) inserting the lower winding (31) into the first winding slot (23) and the fourth winding slot (26),
c) inserting the middle winding (32) into a second winding slot (24) and a fifth winding slot (27), and
d) inserting the upper winding (33) into a third winding slot (25) and a sixth winding slot (28),
such that
- the lower winding head closure (36) is radially more inward with regard to the axis of rotation (12) than the middle winding head closure (37),
- the middle winding head closure (37) is radially more inward with regard to the axis of rotation (12) than the upper winding head closure (38); and
- for each winding a radial extension of the first winding segment (34) and/or a radial extension of the second winding segment (35) is larger, in particular at least three times larger, compared to a radial extension of the winding head closure (36, 37, 38).

11. Method according to claim 10, the method comprising the following further steps:
m) providing a preformed arrangement, comprising the lower winding, the middle winding and the upper winding, and
n) inserting the arrangement into the winding slots of the stator core (21).

## Patentansprüche

1. Anordnung eines Statorsegments (20) einer elektrischen Maschine,
wobei
- die elektrische Maschine einen Rotor (11) umfasst, der um eine Rotationsachse (12) drehbar montiert ist,
- das Statorsegment (20) einen Statorkern (21) mit mehreren Wicklungsnuten umfasst, von denen jede die Rotationsachse (12) entlang verläuft und die in Bezug auf die Rotationsachse (12) in Umfangsrichtung zueinander beabstandet sind,
- die Anordnung mindestens eine Gruppe aus drei Wicklungen (31, 32, 33) umfasst, wobei jede der drei Wicklungen (31, 32, 33) eine geschlossene Schleife bildet, die somit einen Innenbereich der Wicklung und einen Außenbereich in Bezug auf die Wicklung definiert,
- jede Wicklung ein gerades erstes Wicklungssegment (34), ein gerades zweites Wicklungssegment (35) und einen Wickelkopf umfasst,
- jedes erstes Wicklungssegment (34) im Wesentlichen parallel zu jedem zweiten Wicklungssegment (35) verläuft,
- das erste Wicklungssegment (34) der ersten Wicklung (31) so angeordnet und ausgelegt ist, dass es sich in eine erste Wicklungsnut (23) einlegen lässt, und das zweite Wicklungssegment (35) der ersten Wicklung (31) so angeordnet und ausgelegt ist, dass es sich in eine vierte Wicklungsnut (26) einlegen lässt, wobei es sich bei der vierten Wicklungsnut (26) in Bezug auf die erste Wicklungsnut (23) um die dritte benachbarte Wicklungsnut (25) handelt,
- jeder Wickelkopf einen Wickelkopfabschluss (36, 37, 38) mit einer zum Innenbereich weisenden
Wickelkopfabschlussinnenfläche und einer zum Außenbereich weisenden, im Wesentlichen rechteckigen Wickelkopfabschlussaußenfläche umfasst,
- mindestens zwei der drei Wickelkopfabschlussaußenflächen im Wesentlichen parallel zueinander verlaufen und
- die drei Wicklungen (31, 32, 33) so angeordnet und ausgelegt sind, dass sie sich derart in die Wicklungsnuten einlegen lassen, dass jeder der drei Wickelköpfe in Bezug zu den anderen beiden Wickelköpfen versetzt ist,
**dadurch gekennzeichnet, dass**
- die Gruppe aus drei Wicklungen (31, 32, 33) eine obere Wicklung mit einem oberen Wickelkopfabschluss (36), eine mittlere Wicklung mit einem mittleren Wickelkopfabschluss (37) und eine untere Wicklung mit einem unteren Wickelkopfabschluss (38) umfasst,
wobei die Wicklungen (31, 32, 33) so angeordnet und ausgelegt sind, dass sie sich derart in die Wicklungsnuten einlegen lassen, dass
- der untere Wickelkopfabschluss (36) in Bezug auf die Rotationsachse (12) radial weiter innen liegt als der mittlere Wickelkopfabschluss (37),
- der mittlere Wickelkopfabschluss (37) in Bezug auf die Rotationsachse (12) radial weiter innen liegt als der obere Wickelkopfabschluss (38),
- wobei die mittlere Wicklung (32) in eine zweite Wicklungsnut (24) und eine fünfte Wicklungsnut (27) und die obere Wicklung (33) in eine dritte Wicklungsnut (25) und eine sechste Wicklungsnut (28) eingesetzt ist, und
- für jede Wicklung eine radiale Abmessung des ersten Wicklungssegments (34) und/oder eine radiale Abmessung des zweiten Wicklungssegments (35) im Vergleich zu einer radialen Abmessung des Wickelkopfabschlusses (36, 37, 38) größer, insbesondere mindestens dreimal so groß ist.

2. Anordnung nach dem vorhergehenden Anspruch,
**dadurch gekennzeichnet, dass** axiale Abmessungen der drei Wicklungen (31, 32, 33) im Wesentlichen gleich sind.

3. Anordnung nach einem der vorhergehenden Ansprüche,
**dadurch gekennzeichnet, dass** jede Wicklung einen weiteren Wickelkopf (45) umfasst, der dem Wickelkopf gegenüberliegt.

4. Anordnung nach Anspruch 3,
**dadurch gekennzeichnet, dass** der Wickelkopf und der weitere Wickelkopf (45) spiegelsymmetrisch und/oder punktsymmetrisch zueinander sind.

5. Anordnung nach einem der vorhergehenden Ansprüche,
**dadurch gekennzeichnet, dass** der Statorkern (21) mehrere Statorkernsegmente (22) umfasst, die nacheinander die Rotationsachse (12) entlang angeordnet sind.

6. Anordnung nach einem der vorhergehenden Ansprüche,
**dadurch gekennzeichnet, dass** die Wicklungen benachbarter Statorsegmente (20) in Reihe miteinander verbunden sind.

7. Anordnung nach einem der vorhergehenden Ansprüche,
**dadurch gekennzeichnet, dass** das Statorsegment (20) Bestandteil eines Stators (14) ist, der insbesondere mehrere Statorsegmente (20) umfasst.

8. Anordnung nach einem der vorhergehenden Ansprüche,
**dadurch gekennzeichnet, dass** es sich bei der elektrischen Maschine um einen Generator handelt.

9. Windenergieanlage mit einem Generator, der ein Statorsegment (20) mit einer Anordnung nach einem der vorhergehenden Ansprüche umfasst.

10. Verfahren zum Fertigen der Anordnung eines Statorsegments (20) einer elektrischen Maschine nach einem der Ansprüche 1 bis 8, das folgende Schritte umfasst:
a) Bereitstellen des Statorkerns (21) und der mindestens einen Gruppe aus drei Wicklungen (31, 32, 33),
b) Einsetzen der unteren Wicklung (31) in die erste Wicklungsnut (23) und die vierte Wicklungsnut (26),
c) Einsetzen der mittleren Wicklung (32) in eine zweite Wicklungsnut (24) und eine fünfte Wicklungsnut (27) und
d) Einsetzen der oberen Wicklung (33) in eine dritte Wicklungsnut (25) und eine sechste Wicklungsnut (28),
so dass
- der untere Wickelkopfabschluss (36) in Bezug auf die Rotationsachse (12) radial weiter innen liegt als der mittlere Wickelkopfabschluss (37),
- der mittlere Wickelkopfabschluss (37) in Bezug auf die Rotationsachse (12) radial weiter innen liegt als der obere Wickelkopfabschluss (38) und
- für jede Wicklung eine radiale Abmessung des ersten Wicklungssegments (34) und/oder eine radiale Abmessung des zweiten Wicklungssegments (35) im Vergleich zu einer radialen Abmessung des Wickelkopfabschlusses (36, 37, 38) größer, insbesondere mindestens dreimal so groß ist.

11. Verfahren nach Anspruch 10, das die folgenden weiteren Schritte umfasst:
m) Bereitstellen einer vorgeformten Anordnung, die die untere, die mittlere und die obere Wicklung umfasst, und
n) Einsetzen der Anordnung in die Wicklungsnuten des Statorkerns (21).

## Revendications

1. Agencement d'un segment de stator (20) d'une machine électrique,
dans lequel
- la machine électrique comprend un rotor (11) qui est monté en rotation autour d'un axe de rotation (12),
- le segment de stator (20) comprend un noyau de stator (21) ayant une pluralité de fentes d'enroulement, chaque fente d'enroulement s'étendant le long de l'axe de rotation (12) et étant espacée des autres de manière circonférentielle par rapport à l'axe de rotation (12),
- l'agencement comprend au moins un groupe de trois enroulements (31, 32, 33), chacun des trois enroulements (31, 32, 33) se présentant sous la forme d'une boucle fermée, la boucle définissant ainsi une zone interne de l'enroulement et une zone externe par rapport à l'enroulement,
- chaque enroulement comprend un premier segment d'enroulement droit (34), un second segment d'enroulement droit (35), et une tête d'enroulement,
- chaque premier segment d'enroulement (34) est sensiblement parallèle à chaque second segment d'enroulement (35),
- le premier segment d'enroulement (34) du premier enroulement (31) est agencé et préparé pour être incorporé dans une première fente d'enroulement (23) et le second segment d'enroulement (35) du premier enroulement (31) est agencé et préparé pour être incorporé dans une quatrième fente d'enroulement (26), dans lequel la quatrième fente d'enroulement (26) est la troisième fente d'enroulement adjacente (25) par rapport à la première fente d'enroulement (23),
- chaque tête d'enroulement comprend une fermeture de tête d'enroulement (36, 37, 38) ayant une surface interne de fermeture de tête d'enroulement faisant face à la zone interne, et une surface externe de fermeture de tête d'enroulement sensiblement rectangulaire faisant face à la zone externe,
- au moins deux des trois surfaces externes de fermeture de tête d'enroulement sont sensiblement parallèles entre elles, et
- les trois enroulements (31, 32, 33) sont agencés et préparés pour être incorporés dans les fentes d'enroulement de sorte que chacune des trois têtes d'enroulement est décalée par rapport aux deux autres têtes d'enroulement,
**caractérisé en ce que**
- le groupe de trois enroulements (31, 32, 33) comprend un enroulement supérieur ayant une fermeture de tête d'enroulement supérieur (36), un enroulement médian ayant une fermeture de tête d'enroulement médian (37) et un enroulement inférieur ayant une fermeture de tête d'enroulement inférieur (38),
dans lequel les enroulements (31, 32, 33) sont agencés et préparés pour être incorporés dans les fentes d'enroulement de sorte que
- la fermeture de tête d'enroulement inférieur (36) est radialement plus à l'intérieur par rapport à l'axe de rotation (12) que la fermeture de tête d'enroulement médian (37),
- la fermeture de tête d'enroulement médian (37) est radialement plus à l'intérieur par rapport à l'axe de rotation (12) que la fermeture de tête d'enroulement supérieur (38) ;
- dans lequel l'enroulement médian (32) est inséré dans une deuxième fente d'enroulement (24) et une cinquième fente d'enroulement (27) et l'enroulement supérieur (33) est inséré dans une troisième fente d'enroulement (25) et une sixième fente d'enroulement (28) ; et
- pour chaque enroulement une extension radiale du premier segment d'enroulement (34) et/ou une extension radiale du second segment d'enroulement (35) est plus grande, en particulier au moins trois fois plus grande, comparativement à une extension radiale de la fermeture de tête d'enroulement (36, 37, 38).

2. Agencement selon la revendication précédente,
**caractérisé en ce que** les extensions axiales des trois enroulements (31, 32, 33) sont sensiblement égales.

3. Agencement selon l'une des revendications précédentes,
**caractérisé en ce que** chaque enroulement comprend une tête d'enroulement supplémentaire (45), qui est située de manière opposée à la tête d'enroulement.

4. Agencement selon la revendication 3,
**caractérisé en ce que** la tête d'enroulement et la tête d'enroulement supplémentaire (45) sont en symétrie en miroir et/ou en symétrie ponctuelle entre elles.

5. Agencement selon l'une des revendications précédentes,
**caractérisé en ce que** le noyau de stator (21) comprend une pluralité de segments de noyau de stator (22) qui sont agencés les uns après les autres le long de l'axe de rotation (12).

6. Agencement selon l'une des revendications précédentes,
**caractérisé en ce que** les enroulements de segments de stator adjacents (20) sont connectés en série les uns aux autres.

7. Agencement selon l'une des revendications précédentes,
**caractérisé en ce que** le segment de stator (20) fait partie d'un stator (14), qui en particulier comprend une pluralité de segments de stator (20).

8. Agencement selon l'une des revendications précédentes,
**caractérisé en ce que** la machine électrique est un générateur.

9. Éolienne comprenant un générateur comprenant un segment de stator (20) comprenant un agencement selon l'une des revendications précédentes.

10. Procédé de fabrication de l'agencement d'un segment de stator (20) d'une machine électrique selon l'une quelconque des revendications 1 à 8, et le procédé comprenant les étapes suivantes :
a) la fourniture du noyau de stator (21) et de l'au moins un groupe de trois enroulements (31, 32, 33),
b) l'insertion de l'enroulement inférieur (31) dans la première fente d'enroulement (23) et la quatrième fente d'enroulement (26),
c) l'insertion de l'enroulement médian (32) dans une deuxième fente d'enroulement (24) et une cinquième fente d'enroulement (27), et
d) l'insertion de l'enroulement supérieur (33) dans une troisième fente d'enroulement (25) et une sixième fente d'enroulement (28),
de sorte que
- la fermeture de tête d'enroulement inférieur (36) est radialement plus à l'intérieur par rapport à l'axe de rotation (12) que la fermeture de tête d'enroulement médian (37),
- la fermeture de tête d'enroulement médian (37) est radialement plus à l'intérieur par rapport à l'axe de rotation (12) que la fermeture de tête d'enroulement supérieur (38) ; et
- pour chaque enroulement une extension radiale du premier segment d'enroulement (34) et/ou une extension radiale du second segment d'enroulement (35) est plus grande, en particulier au moins trois fois plus grande, comparativement à une extension radiale de la fermeture de tête d'enroulement (36, 37, 38).

11. Procédé selon la revendication 10, le procédé comprenant les étapes supplémentaires suivantes :
m) la fourniture d'un agencement préformé, comprenant l'enroulement inférieur, l'enroulement médian et l'enroulement supérieur, et
n) l'insertion de l'agencement dans les fentes d'enroulement du noyau de stator (21).
